## Europäisches Patentamt
## European Patent Office
## Office européen des brevets

(19)

(11) Numéro de publication: **0 079 262 B1**

# FASCICULE DE BREVET EUROPEEN

(45) Date de publication du fascicule du brevet:
**21.08.85**

(51) Int. Cl.⁴: **B 29 D 17/00, G 11 B 3/70**

(21) Numéro de dépôt: **82401952.5**

(22) Date de dépôt: **22.10.82**

(54) Procédé d'obtention d'un disque-copie à partir d'une gravure originale portée par une matrice.

(30) Priorité: **06.11.81 FR 8120854**

(43) Date de publication de la demande:
**18.05.83 Bulletin 83/20**

(45) Mention de la délivrance du brevet:
**21.08.85 Bulletin 85/34**

(84) Etats contractants désignés:
**DE GB IT NL SE**

(56) Documents cités:
**FR - A - 2 384 404**
**FR - A - 2 463 474**
**FR - A - 2 468 456**

(73) Titulaire: **THOMSON-CSF, 173, Boulevard Haussmann, F-75379 Paris Cedex 08 (FR)**

(72) Inventeur: **Lange, François, THOMSON-CSF SCPI 173, bld Haussmann, F-75379 Paris Cedex 08 (FR)**
Inventeur: **Rascle, Roger, THOMSON-CSF SCPI 173, bld Haussmann, F-75379 Paris Cedex 08 (FR)**

(74) Mandataire: **Weinmiller, Jürgen et al, Zeppelinstrasse 63, D-8000 München 80 (DE)**

BUNDESDRUCKEREI BERLIN

## Description

L'invention concerne la réalisation de disques vidéo à partir d'une matrice originale munie d'un relief dont le report par moulage met en œuvre une résine. L'information est emmagasinée sous forme d'accidents de surface en creux ou en saillie qui le long d'une piste matérialisent la variation temporelle des signaux porteurs de ladite information.

Les procédés de moulage sont particulièrement bien adaptés à la production de petites séries. Ils consistent à disposer entre une matrice et un substrat un agent moulant intermédiaire qui après solidification fournit un contretype de l'empreinte protée par la matrice. Ce procédé de moulage introduit la notion de complémentarité entre la matrice et le disque puisque les creux de l'une correspondent aux reliefs de l'autre et inversement.

Le disque original porte des pistes successives gravées par exemple par ablation thermique selon des micro-cuvettes. On obtient un disque copie dont la surface constituée par la couche de l'agent moulant durcie, reproduit le même relief en négatif, c'est-à-dire d'après l'exemple choisi des micro-reliefs. Pour éviter l'interposition d'une couche d'un agent de démoulage entre le disque original et la substance durcissable, ce qui risque d'être préjudiciable localement à la qualité du micro-relief, ou utilise une résine pouvant s'étaler facilement et qui une fois durcie n'adhère pas au disque original mais qui par contre adhère au substrat qui lui sert de support.

Une méthode de fabrication consiste à déposer la résine près du centre de la matrice. Un substrat flexible est galbé et appliqué sur la résine puis aplati progressivement contre la matrice afin de chasser la résine vers la périphérie du substrat. La résine est ensuite polymérisée par exemple à l'aide d'un rayonnement ultra-violet. Le galbe peut être obtenu à l'aide d'un système comportant une couronne d'appui soutenant le substrat sur sa périphérie et un coussin élastique déformable et mobile verticalement permettant d'exercer une poussée progressive sur le substrat, comme décrit dans la demande de brevet Français FR-2 468 456 déposé par la demanderesse.

Par ce procédé, la résine recouvre la surface de la matrice et l'excédent de résine éventuel forme un bourrelet sur le bord extérieur de la matrice. Vers le centre du dispositif, l'excédent de résine peut refluer dans l'espace ménagé entre le nez de centrage de ce dispositif et le substrat. Si ces excédents de résine sont polymérisés, ils peuvent constituer des points d'accrochage qui rendent le démoulage plus difficile ou qui peuvent abimer l'alésage central du substrat. D'autre part, tout ou partie du bourrelet, de forme irrégulière, restant accroché au substrat peut s'avérer nuisible pour l'utilisation ultérieure du disque.

Si la polymérisation sur les bords de la matrice est évitée, par exemple à l'aide de caches amovibles, le reste de résine non polymérisée doit être ensuite nettoyé et risque de venir souiller la gravure. Le nettoyage des excédents de résine, polymérisés ou non, sont dans tous les cas des opérations fastidieuses.

D'autre part de nombreuses applications nécessitent la protection de la gravure à l'aide d'un capot fixé sur le substrat par des joints situés en dehors de la zone gravée. Un capot en matière plastique peut par exemple être collé ou soudé sur le substrat. Or la réalisation de ces joints est rendue difficile par la présence d'une couche de résine sur l'une ou l'autre des surfaces à assembler.

Afin de pallier ces inconvénients, on propose de réaliser les disques supports d'information de telle manière que la totalité de la résine utilisée soit polymérisée et reste entièrement sur le substrat après démoulage sans former de bourrelet de résine de dimensions incontrôlées. Ceci peut être obtenu à l'aide de l'invention qui a pour objet un procédé d'obtention d'un disque porteur d'informations présentes sous la forme de micro-domaines superficiels dans une plage annulaire de gravure, par moulage à partir d'une matrice originale gravée, consistant à reporter sur un substrat l'empreinte du disque original au moyen d'une subtance s'étalant entre ledit substrat et le disque original, ladite substance adhérant audit substrat lors de son durcissement, la plage de gravure s'étendant entre des plages intérieure et extérieure vierges, caractérisé en ce que la séparation entre la plage de gravure et les plages vierges se fait par des plages d'arrêt, et que les excédents de substance sont contenus par les plages d'arrêt.

L'invention sera mieux comprise au moyen de la description ci-après et des figures annexées parmi lesquelles:

la figure 1 illustre une phase de la réalisation d'un disque selon l'art connu;

la figure 2 est une vue de dessus d'un disque-copie selon l'invention;

la figure 3 est une vue en coupe d'un disque selon l'invention, en cours de réalisation;

les figures 4 (a) et 4 (b) représentent des vues partielles en coupe d'un substrat au niveau des rainures;

la figure 5 est une vue en coupe d'un disque en cours d'élaboration.

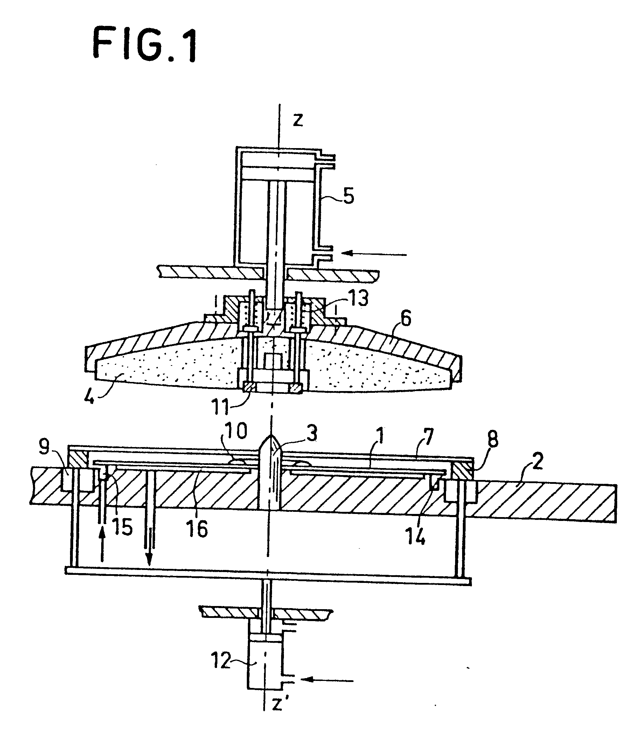

La figure 1 représente une phase de la réalisation d'un disque à partir d'un substrat semi-rigide, selon l'art connu.

Avant de parvenir à la phase illustrée par la figure 1, le déroulement des opérations a été le suivant:

— opération d'alignement des disques 1 et 7 par un centrage rigoureux. La surface du disque original 1 peut être en métal ou en matière synthétique. Le disque copie, de diamètre supérieur au disque 1, est réalisé dans un substrat 7 en plastique, par exemple en chlorure de polyvinyle, en plexiglas ou bien en verre. Ce substrat doit être transparent aux rayons ultra-violets. Un dispositif de dépression assure le maintient du disque 1 sur un plateau 2. Le disque 1 a été préalablement perforé en son centre d'un trou de diamètre prédéterminé centré aussi rigoureusement que possible par rapport à la piste porteuse d'informations. Le plateau 2 est solidaire d'une broche centrale 3 dont les dimensions sont adaptées à celle du trou avec un jeu très réduit (environ 10 microns), sur laquelle on pose le disque 1. Les axes des 2 disques sont confondus en ZZ'.

— dépôt d'une quantité prédéterminée de résine sur la partie centrale du disque 1 suivant un bourrelet circulaire 10 situé légèrement en-deçà de la zone minimale d'inscription. Dans le cas d'un substrat en plastique, la résine choisie peut être une résine acrylique composée de monomères que l'on peut polymériser rapidement par irradiation sous un rayonnement ultra-violet.

— mise en place du disque 7 juste au-dessus du bourrelet de résine de façon qu'il s'appuie sur une couronne 8 extérieure au disque 1 et surélevée par rapport au niveau du plateau 2.

Après ces opérations préliminaires, l'ensemble est placé dans l'axe d'un dispositif qui va assurer l'étalement de la résine. Ce dispositif comprend un coussin de mousse alvéolaire 4 placé dans un siège 6 et formé par exemple de caoutchouc naturel ou d'élastomère dans l'axe de la broche centrale et au-dessus des disques 1 et 7. Le coussin est conçu pour transmettre une pression sur le substrat 7 dans la zone d'inscription. L'ensemble du siège et du coussin est maintenu au-dessus du disque 1 à l'aide d'un vérin à double effet 5 qui commande la descente du coussin 4 selon l'axe zz'. La couronne 8 est rétractable dans une gorge 9 ménagée dans le plateau 2, par exemple au moyen d'un vérin 12. Lorsque le coussin descend, il plaque le substrat 7 en son centre de façon à écraser le bourrelet de résine 10. La couronne 8 provoque alors un galbage du substrat. Le coussin commence à se déformer à partir de sa partie centrale en refoulant la résine vers l'extérieur. La couronne d'appui 8 descend progressivement en diminuant la courbure du substrat jusqu'à aplatissement total de celui-ci dans le plan de la matrice. A la fin de la phase d'étalement, la face du coussin en contact avec le substrat est devenue plane et assure une pression sur toute la surface de ce dernier. Un anneau central de pressage 11 placé dans une cavité du coussin et sollicité par des ressorts 13 est prévu pour excercer un appui au centre du disque 7 et assurer en coopération avec la couronne 8 les positionnements relatifs des deux disques pendant toute la durée de la phase d'étalement. L'anneau 11, d'un diamètre extérieur légèrement inférieur au diamètre minimal d'inscription, entre en fonction dès le début de la phase d'étalement et tend à refouler la résine vers l'extérieur. A la fin de cette phase, un temps de repos est nécessaire afin de permettre au surplus de résine éventuel de s'écouler vers l'extérieur de la matrice, dans la gorge 9. Une fente périphérique 14 est ménagée dans le plateau au voisinage de la matrice et débouche dans une rainure circulaire 15 où règne une légère surpression, de façon à chasser la résine vers la gorge 9 et à l'empêcher de pénétrer dans la chambre de dépression 16 situé entre le plateau 2 et le disque 1.

La phase suivante consiste à exposer l'ensemble supporté par le plateau 2 à la lumière fournie dans une lampe à ultra-violets. Pour protéger l'excédent de résine contenu dans la gorge 9 de l'insolation, on a disposé un écran de masquage au-dessus de cette gorge. Après insolation, l'écran est retiré et la couronne d'appui 8 remonte sous l'action du vérin 12 de façon à provoquer le décollement du substrat 7 sur lequel adhère la résine.

L'élaboration de disques-copies selon le procédé décrit introduit une opération supplémentaire celle du masquage. Il faut également prévoir le nettoyage de la gorge 9. Pour pouvoir disposer un capot sur le disque-copie il faut prévoir une surface sans résine d'étendue suffisante, donc arrêter la progression de la résine au voisinage immédiat de la périphérie de la zone gravée. Dans ce cas, la marge qui est ménagée entre le bord de la matrice et la périphérie de la zone gravée peut servir pour la réalisation du joint. Il faut cependant éviter de perdre trop de place et de ce fait réduire la gravure. En disposant de plages d'arrêt concentriques sur le disque comme le propose l'invention les inconvénients cités disparaissent.

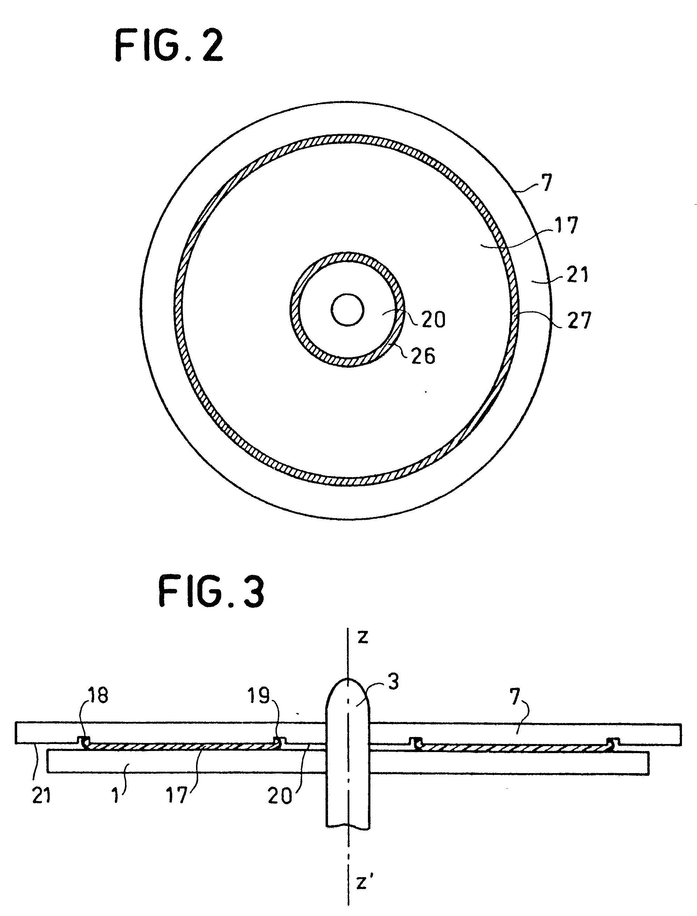

La figure 2 est une vue de dessus d'un disque-copie selon l'invention. Sur le substrat 7 de ce disque, on distingue la plage de gravure 17 s'étendant entre des plage intérieure 20 et extérieure 21. La séparation entre la plage de gravure et les plages 20 et 21 est faite par des plages d'arrêt 26 et 27.

La figure 3 et une vue en coupe d'un disque selon l'invention, en cours de réalisation. De la figure 1 on n'a gardé que la broche 3, le disque original 1 et le substrat 7. Les phases de moulage jusqu'à aplatissement de la résine sont les mêmes que précédemment. On constate que 2 rainures circulaires et concentriques à l'axe zz' de faible profondeur 18 et 19 ont été creusées dans le substrat 7. Ces rainures permettent de recueillir l'excédent de résine résultant de l'opération d'aplatissement et forment donc des plages d'arrêt. Après cette opération et l'opération de durcissement de la résine, faite cette fois-ci sans masque, le disque-copie présente une zone gravée 17 délimitée par les 2 rainures concentriques 18 et 19 et deux couronnes 20 et 21 dépourvues de résine. La présence de la rainure 19 évite à l'excédent de résine proche de la broche 3 de venir remplir le jeu existant entre cette broche et le substrat 7. Par leur présence, les rainures 18 et 19 en recueillant l'excédent de résine poussée vers le bord extérieur et vers le centre du substrat, contribue à créer des couronnes 20 et 21 qui pourront recevoir des joints permettant la pose d'un capot.

La largeur et la profondeur requises pour les rainures dépendent de la quantité d'excédent de résine à recueillir, c'est-à-dire de la précision du dosage du bourrelet de résine déposé, des variations incontrôlées d'épaisseur de la couche de résine, des qualités géométriques du substrat et de la matrice. La largeur des rainures peut être comprise entre 1 et 3 mm et la profondeur entre 0,1 et 0,3 mm. Des rainures trop profondes réduiraient la résistance mécanique du disque-copie.

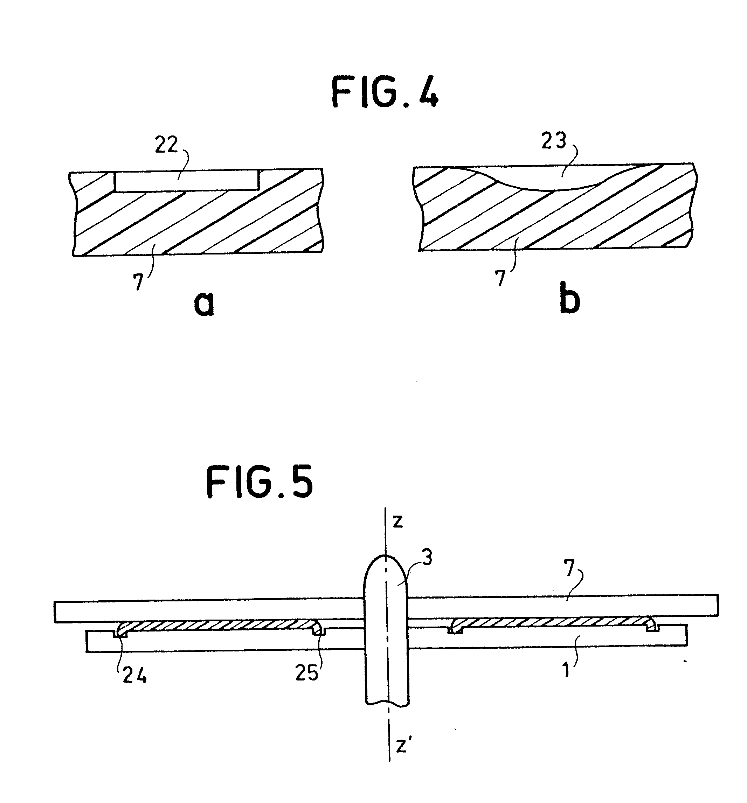

Les figures 4 (a) et 4 (b) représentent deux exemples de profils possibles pour les rainures. On peut disposer d'une section rectangulaire comme le montre la figure 4 (a) où une rainure 22 est creusée dans le substrat 7, mais il est préférable que la rainure présente une forme arrondie telle que la rainure 23 creusée dans le substrat 7 et représentée à la figure 4 (b). En effet, cette dernière solution présente l'avantage de faciliter le démoulage et de moins affecter la résistance mécanique du substrat. Il est avantageux de polir la surface de la rainure afin d'éviter de perturber le flux lumineux ultra-violet servant le cas échéant à polymériser la résine.

Il entre également dans le cadre de l'invention de réaliser les rainures non pas dans le substrat du disque-copie mais dans la matrice. La figure 5 est une vue en coupe d'un disque en cours d'élaboration et arrivé au même stade de fabrication que celui illustré par la figure 3. On y reconnaît la broche 3 centrée sur l'axe zz', le substrat 7 et le disque matrice 1. Dans cet exemple deux rainures circulaires et concentriques on été creusées dans la matrice pour remplir les mêmes fonctions que précédemment, c'est-à-dire recueillir l'excédent de résine. Dans ce cas la couche de résine du disquecopie se terminera par 2 petits bourrelets dont l'épaisseur maximum correspond à la profondeur des rainures. Les rainures peuvent avoir les mêmes dimensions que lorsqu'elles sont pratiquées sur le substrat. La forme des rainures sera de préférence choisie arrondie de façon à faciliter le démoulage et il sera avantageux de la polir afin d'éviter une adhérence trop grande du bourrelet de résine dans la rainure de la matrice lors du démoulage.

Il existe d'autres moyens d'éviter la polymérisation de la résine dans les zones où elle est indésirable. On peut, par exemple, éclairer les limites des zones que l'on ne veut pas voir recouvertes de résine par un pinceau de lumière ultraviolette qui provoque la polymérisation de la résine dès que celle-ci atteint la limite fixée.

Un autre moyen consiste à déposer sur la zone que la résine de doit pas recouvrir, sur le disque ou sur la matrice, ou sur les deux à la fois, une couche d'une matière empêchant la fixation de la résine sur le substrat, par exemple une couche de silicone ou de polytétrafluoroéthylène (plus connu par les initiales PTFE).

Pour ces deux derniers moyens on peut éventuellement prévoir une rainure pour recueillir l'excédent de résine.

L'invention permet donc de disposer de disques-copies exempts de résine ou de toute autre substance jouant le même rôle sur les zones où elle n'est pas désirée. Elle permet aux disques-copies de recevoir facilement un capot. Surtout, elle évite les opérations de masquage et le nettoyage des excédents de résine.

## Revendications

1. Procédé d'obtention d'un disque porteur d'informations présentes sous la forme de micro-domaines superficiels dans une plage annulaire de gravure, par moulage à partir d'une matrice originale gravée (1), consistant à reporter sur un substrat (7) l'empreinte du disque original au moyen d'une substance s'étalant entre ledit substrat et le disque original, ladite substance adhérant audit substrat lors de son durcissement, la plage de gravure (17) s'étendant entre des plages intérieure (20) et extérieure (21) vierges, caractérisé en ce que la séparation entre la plage de gravure et les plages vierges se fait par des plages d'arrêt (26 et 27), et que les excédents de substance sont contenus par les plages d'arrêt.

2. Procédé selon la revendication 1, caractérisé en ce que ladite substance reflue sous l'action d'une pression entre ledit substrat et le disque original.

3. Procédé selon l'une des revendications 1 ou 2, caractérisé en ce que lesdites plages d'arrêt comprennent au moins une rainure circulaire collectrice concentrique (18) creusée dans le substrat (7) en dehors de la plage gravée et servant à recueillir l'excédent de ladite substance.

4. Procédé selon l'une des revendications 1 ou 2, caractérisé en ce que lesdites plages d'arrêt comprennent au moins une rainure circulaire concentrique (24) creusée dans la matrice (1) et servant à recueillir l'excédent de ladite substance.

5. Procédé selon l'une des revendications 3 ou 4, caractérisé en ce que ladite rainure présente un profil arrondi.

6. Procédé selon l'une quelconque des revendications 3 à 5, caractérisé en ce que ladite rainure présente une surface polie.

7. Procédé selon l'une des revendications 1 ou 2, caractérisé en ce que ladite substance étant photopolymérisable, au moins un pinceau de lumière ultraviolette délimite la zone d'étalement de ladite substance.

8. Procédé selon l'une des revendications 1 ou 2, caractérisé en ce que les zones à ne pas recouvrir de ladite substance ont été recouvertes au préalable d'une matière empêchant la fixation sur le substrat de ladite substance.

## Patentansprüche

1. Verfahren zur Herstellung einer Informationen tragenden Scheibe, wobei die Informationen in Form von oberflächlichen Mikro-Bereichen in einem ringförmigen Gravurbereich vorliegen und die Herstellung durch Guß ausgehend von einer gravierten Original-Matrix (1) erfolgt und darin besteht, daß auf ein Substrat (7) der Abdruck der Originalscheibe mittels einer Substanz aufgebracht wird, die sich zwischen dem Substrat und der Originalscheibe ausbreitet und beim Erhärten am Substrat haftet, wobei sich der Gravurbereich (17) zwischen einem unbenutzten Innenbereich (20) und einem unbenutzten Außenbereich (21) erstreckt, dadurch gekennzeichnet, daß die Trennung zwischen Gravurbereich und den unbenutzten Bereichen durch Haltebereiche (26 und 27) erfolgt und daß die überschüssige Substanz von den Haltebereichen zurückgehalten wird.

2. Verfahren nach Anspruch 1, dadurch gekennzeichnet, daß die Substanz unter Einwirkung eines Drucks zwischen das Substrat und die Orignalscheibe zurückfließt.

3. Verfahren nach einem der Ansprüche 1 oder 2, dadurch gekennzeichnet, daß die Haltebereiche mindestens eine kreisförmige konzentrische Sammelnut (18) aufweisen, die in das Substrat (7) außerhalb des Gravurbereiches eingeschnitten ist und dazu dient, den Überschuß der Substanz aufzufangen.

4. Verfahren nach einem der Ansprüche 1 oder 2, dadurch gekennzeichnet, daß die Haltebereiche mindestens eine kreisförmige konzentrische Nut (24) aufweisen, die in die Matrix (1) eingeschnitten ist und dazu dient, den Überschuß der Substanz aufzufangen.

5. Verfahren nach einem der Ansprüche 3 oder 4, dadurch gekennzeichnet, daß die Nut ein abgerundetes Profil hat.

6. Verfahren nach einem der Ansprüche 3 bis 5, dadurch gekennzeichnet, daß die Nut eine polierte Oberfläche hat.

7. Verfahren nach einem der Ansprüche 1 oder 2, dadurch gekennzeichnet, daß die Substanz mit Hilfe von Licht polymerisierbar ist und mindestens ein ultravioletter Lichtstrahl den Erstreckungsbereich der Substanz begrenzt.

8. Verfahren nach einem der Ansprüche 1 oder 2, dadurch gekennzeichnet, daß die nicht mit der Substanz zu bedeckenden Zonen vorher mit einem Material bedeckt wurden, das die Haftung der Substanz auf dem Substrat verhindert.

## Claims

1. A method for obtaining an information-carrying disk, the informations being in the form of surface micro-zones in an annular recording area, by moulding from an original recorded matrix (1), the process consisting of transferring to a substrate (7) the print of the original disk by means of a substance spreading between said substrate and the original disk, the substance adhering to the subtrate during its hardening, the recording area (17) extending between inner (20) and outer free areas (21), characterized in that the separation between the recording area and the free areas is provided by stop areas (26 and 27), and that the excess of substance is contained by the stop areas.

2. A method according to claim 1, characterized in that said substance flows back under the action of a pressure between the substrate and the original disk.

3. A method according to one of claims 1 or 2, characterized in that said stop areas comprise at least one concentric circular collecting groove (18) made in the substrate (7) outside the recorded area and intended to collect the excess of said substance.

4. A method according to one of claims 1 or 2, characterized in that said stop areas comprise at least one concentric circular groove (24) made in the matrix (1) and intended to collect the excess of said substance.

5. A method according to one of claims 3 or 4, characterized in that the groove has a rounded profile.

6. A method according to any one of claims 3 to 5, characterized in that the groove has a polished surface.

7. A method according to one of claims 1 or 2, characterized in that said substance being photopolymerizable, at least one beam of ultraviolet light defines the spreading area of said substance.

8. A method according to one of claims 1 or 2, characterized in that the areas which are not to be covered by the substance are covered beforehand with a material preventing the fixing of the substance to the substrate.

# FIG.1

# FIG.2

# FIG.3

0 079 262

# FIG.4

22

7

a

23

7

b

# FIG.5

z

3

7

24

25

1

z'

11